Europäisches Patentamt

European Patent Office

Office européen des brevets

(11) Veröffentlichungsnummer: **0 002 287**
**B1**

(12) **EUROPÄISCHE PATENTSCHRIFT**

(19)

(45) Veröffentlichungstag der Patentschrift:
**02.09.81**

(21) Anmeldenummer: **78200183.8**

(22) Anmeldetag: **11.09.78**

(51) Int. Cl.³: **B 65 G 17/06**, B 65 G 17/42

(54) **Stahlplattenband.**

(30) Priorität: **26.11.77 DE 2752945**

(43) Veröffentlichungstag der Anmeldung:
**13.06.79 Patentblatt 79/12**

(45) Bekanntmachung des Hinweises auf die Patenterteilung:
**02.09.81 Patentblatt 81/35**

(84) Benannte Vertragsstaaten:
**BE CH DE FR GB LU NL SE**

(56) Entgegenhaltungen:
**DE-C-972 470**
**DE-C-1 027 133**
**DE-U-1 844 964**
**FR-A-1 200 260**
**US-A-2 987 165**

(73) Patentinhaber: **TKV Transportanlagen- Konstruktions-
und Vertriebs-GmbH, Heinrich von Kleist-Strasse 2,
D-6380 Bad Homburg (DE)**

(72) Erfinder: **Schepers, Rudolf, verstorben, vormals wohnhaft
im Dammwald 10, D-6382 Friedrichsdorf (DE)**
Erfinder: **Klug, Herbert, Frölingstrasse 7, D-6380 Bad
Homburg (DE)**

(74) Vertreter: **Fischer, Ernst, Dr., Reuterweg 14,
D-6000 Frankfurt am Main 1 (DE)**

BUNDESDRUCKEREI BERLIN

Stahlplattenband

Die Erfindung betrifft ein Stahlplattenband mit einer Plattenteilung, die einem Vielfachen der Kettenteilung entspricht, bestehend aus Zugketten, auf Schienen laufenden Tragplatten und Kettenrädern in den Umkehrstationen, wobei die Tragplatten jeweils an ihrem hinteren Ende mit Laufrollenachsen und Mitnehmergliedern sowie jeweils an ihrem vorderen Ende mit Kettenachsen und mit einem Langloch versehenen Stützlaschen über einen Bolzen an einem Kettenglied der Kette gelenkig befestigt sind.

Die Verbindung der Tragplatten mit den Zugketten erfolgt durch Sonderelemente, die aus sog. Mitnehmergliedern und Stützlaschen bestehen. Diese Sonderelemente zwischen Ketten und Tragplatten sind erforderlich, um einerseits das Schwenken der Tragplatten zu ermöglichen und andererseits die Längenänderung auszugleichen, die sich zwangsläufig ergibt, wenn sich die langen Tragplatten beim Umlauf der Ketten um die Kettenräder in die Sehne des Kettenrad-Teilkreises legen. In den Gelenk- und Drehpunkten der Sonderelemente entsteht bei vornehmlich in der Hütten- und Zementindustrie eingesetzten Stahlplattenbändern starker Verschleiß. Dies führt zu Schlägen der in Laufrichtung vorne liegenden Kettenachse in dem Langloch der Stützlaschen.

Es sind Ausführungen bekannt, bei denen die hinten liegende, mit Laufrollen versehene Achse der Tragplatten (Laufrollenachse) über ein sogenanntes Mitnehmerglied mit den Ketten verbunden ist, während die in Förderrichtung vorne befindliche Achse (Kettenachse) durch verschwenkbare, mit Langlöchern für den Längenausgleich an den Umkehren ausgestattete Stützlaschen abgetragen wird. Als Schwenkpunkt dient hierbei ein zur Aufnahme der Stützlaschen verlängerter Kettenbolzen, der gleichzeitig Gelenkpunkt der Zugkette ist (DE-C-972 470, FR-A-12 00 260, DE-U-19 44 984).

Bei den bekannten Bauarten ist das dem Verschleiß unterliegende Mitnehmerglied der Laufrollenachse integrierender Bestandteil der Zugketten und daher mitbestimmend für ihre Lebensdauer. Von Nachteil ist auch der Schwenkpunkt der Stützlaschen auf dem verlängerten Kettenbolzen. Beim Austausch einer Tragplatte müssen die Kettenstränge entspannt werden, weil der verlängerte Kettenbolzen bei diesem Vorgang seitlich in der Kettenbuchse bzw. in den Kettenlaschen bewegt werden muß.

Der Erfindung liegt die Aufgabe zugrunde, einen möglichst einfachen und schnellen Austausch der Sonderelemente sowie eine einfache und wirtschaftliche Ausgestaltung des Stahlplattenbandes zu ermöglichen.

Die Lösung dieser Aufgabe erfolgt erfindungsgemäß dadurch, daß die Mitnehmerglieder der Laufrollenachsen seitlich gegen die Laschenkettenglieder der Außenglieder der Zugketten lösbar befestigt und die Stützlaschen der Kettenachsen in der Teilungsmitte der Kettenteilung oberhalb der Kettenmittellinie angeordnet sind, wobei der Bolzen bei seinem Einlauf in das Kettenrad jeweils auf eine Zahnlücke trifft. Die erforderliche Zahnteilung der Kettenräder kann z. B. durch Kettenräder mit doppelter Zahnteilung erreicht werden.

Eine vorzugsweise Ausgestaltung besteht darin, daß die Mitnehmerglieder von außen gegen die Laschenkettenglieder verschraubt sind. Dadurch bleibt der gesamte Innenraum der Laschenkettenglieder für den Eingriff der Kettenräder frei, und ein Auswechseln der Mitnehmerglieder kann besonders leicht erfolgen.

Eine weitere Ausgestaltung besteht darin, daß die Mitnehmerglieder je Zugkette beidseitig angeordnet sind. Dadurch wird eine besonders günstige Verbindung und ein einwandfreier Lauf der Zugketten erzielt.

Eine vorzugsweise Ausgestaltung besteht außerdem darin, daß die Kontaktstellen der Gelenkpunkte von Mitnehmerglied und Stützlasche schalenförmig ausgebildet sind. Dadurch wird der Verschleiß an den Kontaktstellen zwischen den Achsen der Tragplatten und Mitnehmergliedern sowie Stützlaschen gering gehalten.

Die Erfindung wird an Hand der Figuren näher und beispielsweise erläutert.

Es zeigen:

Fig. 1 eine Seitenansicht eines Plattenbandes im Bereich einer Umkehrstation, wobei das Kettenrad zur Verdeutlichung nur durch seinen Teilkreis dargestellt ist;

Fig. 2 in der linken Hälfte einen Schnitt gemäß A-A in Fig. 1 durch das hintere, mit Laufrollen versehene Plattenende mit dem Mitnehmerglied;

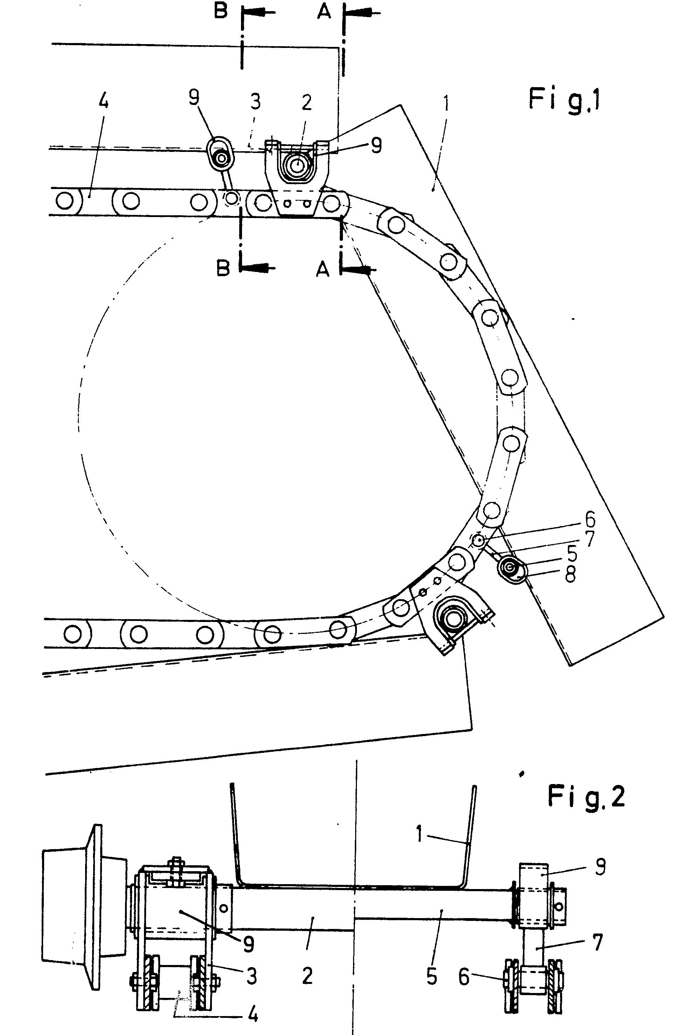

Fig. 2 in der rechten Hälfte einen Schnitt gemäß B-B in Fig. 1 durch das vordere Plattenende mit der Stützlasche.

Die Laufrichtung des Plattenbandes in Fig. 1 erfolgt im Uhrzeigersinn. Die Zugketten 4 bestehen aus einheitlichen, normalen Laschenkettengliedern. Die Verbindungsbolzen der Laschenkettenglieder haben eine einheitliche Länge. Die Tragplatten 1 sind an ihrem hinteren Ende mit der Laufrollenachse 2 und dem Mitnehmerglied 3 gelenkig mit den Zugketten 4 verbunden. Die Mitnehmerglieder 3 sind seitlich gegen die Laschenglieder der Außenglieder der Zugketten 4 von außen verschraubt. Die Tragplatten 1 sind an ihrem vorderen Ende mit der Kettenachse 5 und der mit Langloch 8 versehenen Stützlasche 7 sowie dem Befestigungsbolzen 6 gelenkig an den Zugketten 4 befestigt. Der Befestigungsbolzen 6 ist in der Teilungsmitte der Kettenteilung oberhalb der Kettenmittellinie an einem Kettenglied der Zugketten 4 befestigt, das dem Kettenglied benachbart ist, an dem das Mitnehmerglied 3 befestigt ist. Die Zahnteilung der Kettenräder ist so ausgebildet, daß die Befestigungsbolzen 6 bei ihrem Einlauf in die Kettenräder immer auf eine Zahnlücke in den Kettenrädern treffen.

In Fig. 2 ist in der linken Hälfte eine beidseitige Anbringung des Mitnehmergliedes 3 von außen an die Außenlaschen der Zugketten 4 mittels Verschraubung dargestellt. Die Kontaktstellen von Mitnehmerglied 3 und Stützlasche 7 mit der Laufrollenachse 2 bzw. der Kettenachse 5 sind als Schalen 9 ausgebildet.

Die Vorteile der Erfindung bestehen hauptsächlich in der klaren Trennung von Zugketten und den aus Mitnehmerglied und Stützlasche bestehenden Verschleißteilen. Dadurch ist eine separate und von den Ketten unabhängige Auswechslung der Verschleißteile möglich. Die Lebensdauer der Kette bleibt vom Verschleiß dieser Verschleißteile unbeeinflußt, und die Verschleißteile können aus billigerem Material — insbesondere bei schweren Ketten — hergestellt werden, da die Materialanforderungen verringert werden können. Die Anordnung der Stützlaschen zwischen den Seitenlaschen der Kettenglieder ergibt ebenfalls eine Verbilligung. Außerdem vermindert sich die Anzahl der losen Teile. Die einzelnen Glieder der Ketten können aus einheitlichen Laschenkettengliedern bestehen, die mit Verbindungsbolzen einheitlicher Länge verbunden werden.

## Patentansprüche

1. Stahlplattenband mit einer Plattenteilung, die einem Vielfachen der Kettenteilung entspricht, bestehend aus Zugketten (4), auf Schienen laufenden Tragplatten (1) und Kettenrädern in den Umkehrstationen, wobei die Tragplatten jeweils an ihrem hinteren Ende mit Laufrollenachsen (2) und Mitnehmergliedern (3) sowie jeweils an ihrem vorderen Ende mit Kettenachsen (5) und mit einem Langloch (8) versehenen Stützlaschen (7) über einen Bolzen (6) an einem Kettenglied der Kette gelenkig befestigt sind, dadurch gekennzeichnet, daß die Mitnehmerglieder (3) der Laufrollenachsen (2) seitlich gegen die Laschenkettenglieder der Außenglieder der Zugketten (4) lösbar befestigt und die Stützlaschen (7) der Kettenachsen (5) in der Teilungsmitte der Kettenteilung oberhalb der Kettenmittellinie angeordnet sind, wobei der Bolzen (6) bei seinem Einlauf in das Kettenrad jeweils auf eine Zahnlücke trifft.

2. Stahlplattenband nach Anspruch 1, dadurch gekennzeichnet, daß die Mitnehmerglieder (3) von außen gegen die Laschenkettenglieder verschraubt sind.

3. Stahlplattenband nach den Ansprüchen 1 und 2, dadurch gekennzeichnet, daß die Mitnehmerglieder (3) je Zugkette (4) beidseitig angeordnet sind.

4. Stahlplattenband nach den Ansprüchen 1 bis 3, dadurch gekennzeichnet, daß die Kontaktstellen der Gelenkpunkte von Mitnehmerglied (3) und Stützlasche (7) schalenförmig (9) ausgebildet sind.

## Claims

1. An apron conveyor in which the carrier pitch is a multiple of the chain pitch, comprising traction chains (4), carriers (1) moving on rails, and chain sprockets in the reversing stations, each carrier being provided at its trailing end with a roller-carrying axle (2), which cooperates with coupling flights (3), and being provided at its leading end with a chain-connecting exle (5), which ist articulatedly connected to a chain link of the chains by means of supporting links (7) having elongated openings (8) and pins (6), characterized in that the coupling flights (3) cooperating with the roller-carrying axles (2) are detachably secured to the side bars of the traction chains (4) and the supporting links (7) of the chain-connecting axles (5) are secured above the center line of the chain whereby pin (6) at its entrance into the sprocket always meets with a tooth space.

2. An apron conveyor according to claim 1, characterized in that the coupling flights (3) are screw-connected to the links of the roller chains from the outside.

3. An apron conveyor according to claims 1 and 2, characterized in that coupling flights (3) are provided on both sides of each traction chain (4).

4. An apron conveyor according to claims 1 to 3, characterized in that the coupling flights (3) and the supporting links (7) have shell-like contacting portions (9) which form parts of articulated joints.

## Revendications

1. Bande à plaques d'acier dans laquelle les plaques ont un pas correspondant à un multiple du pas des chaînes, cette bande étant constituée de chaînes de traction (4), de plaques supports (1) voyageant sur des rails, ainsi que de roues à chaînes aux postes de renvoi, les plaques supports étant articulées chacune, à leur extrémité arrière, aux axes (2) des galets de roulement et aux organes d'entraînement (3) tandis que, à leur extrémité avant, elles sont articulées aux axes (5) des chaînes, ainsi qu'à des éclisses supports (7) comportant un trou oblong (8), à l'intervention d'un tourillon (6) adapté à un maillon de chaque chaîne, caractérisée en ce que les organes d'entraînement (3) des axes (2) des galets de roulement sont fixés latéralement et de manière amovible contre les éclisses extérieures des maillons des chaînes de traction (4), tandis que les éclisses supports (7) des axes (5) des chaînes sont disposées au centre du pas de la chaîne et au-dessus de la ligne centrale de celle-ci, le tourillon (6) venant chaque fois se placer sur un entredent lors de son entrée dans une roue à chaîne.

2. Bande à plaques d'acier suivant la revendication 1, caractérisée en ce que les organes d'entraînement (3) sont vissés de l'extérieur

5 **0 002 287** 6

contre les maillons des chaînes articulées.

3. Bande à plaques d'acier suivant les revendications 1 et 2, caractérisée en ce que les organes d'entraînement (3) sont disposés de part et d'autre de chaque chaîne de traction (4).

4. Bande à plaques d'acier suivant les revendications 1 à 3, caractérisée en ce que les points de contact des articulations des organes d'entraînement (3) et des éclisses supports (7) sont réalisés en forme de cuvettes (9).

Fig.1

Fig.2